# EUROPÄISCHE PATENTSCHRIFT

(11) **EP 1 531 290 B1**
(45) Veröffentlichungstag und Bekanntmachung des Hinweises auf die Patenterteilung: **26.12.2012**
(21) Anmeldenummer: 04026154.7
(22) Anmeldetag: 04.11.2004
(51) Int. Cl.: F16H 59/02, F16H 59/10

(54) **Schalteinrichtung**
Gear selector device
Dispositif de sélection de vitesse

(30) Priorität: 13.11.2003 DE 10353240
(43) Veröffentlichungstag der Anmeldung: 18.05.2005
(73) Patentinhaber: ZF FRIEDRICHSHAFEN Aktiengesellschaft, 88038 Friedrichshafen (DE)
(72) Erfinder: Plietker, Klaus, 49356 Diepholz (DE); Mattfeld, Torsten, 28307 Bremen (DE)

(56) Entgegenhaltungen:
- EP-A2- 0 837 266
- DE-A1- 3 714 090
- DE-A1- 19 537 899
- DE-A1- 19 608 981
- DE-A1- 19 817 166
- DE-A1- 19 918 508
- US-A- 5 287 743

## Beschreibung

Die vorliegende Erfindung betrifft eine Schalteinrichtung für ein Getriebe gemäß den Merkmalen des Oberbegriffes des unabhängigen Anspruches 1.

Derartige Schalteinrichtungen sind beispielsweise aus der DE 195 37 899 A1, DE 198 17 166 A1 und DE 37 14 090 A1 bekannt.

In der DE 197 39 632 A1 ist eine Schalteinrichtung zur manuellen Betätigung eines Schaltgetriebes offenbart, die einen in einem Kugelgelenk gelagerten Schalthebel aufweist, der mit zwei in zwei weiteren Kugelgelenken montierten Betätigungselementen verbunden ist und so zwei voneinander entkoppelte Schwenkachsen zur Betätigung von Schaltelementen wie beispielsweise Seilzüge oder Schaltstangen bildet. Schwachpunkt der Kugelgelenke ist die Gefahr des Ausknöpfens der Gelenkkugel aus der Lagerschale des Kugelgelenkes. Diese Problematik wird in der DE 197 39 632 A1 durch entsprechende Anordnung der Betätigungselemente, deren Kraftrichtung außerhalb der Ausknöpfrichtung liegt und somit die Gefahr des Ausknöpfens verringert, gelöst. Allerdings ist die Ausführung der Schalteinrichtung aufgrund der mindestens drei benötigten Kugelgelenke sehr aufwendig und die Herstellung und Wartung damit zeit- und kostenintensiv. Außerdem erfahren die an den Betätigungselementen befestigten Seilzüge bei dem Schaltvorgang sehr große Winkelauslenkungen durch die Auf- und Abbewegung der Betätigungselemente während des Schaltvorgangs. Da Seilzüge einer maximalen Auslenkung von ca. 11 ° ausgesetzt werden dürfen, ohne entscheidende Einbußen hinsichtlich des Wirkungsgrades hinnehmen zu müssen, ist eine sehr präzise Einstellung des Getriebes auf minimale Auslenkungen des Seilzuges notwendig, wodurch wiederum höhere Kosten und eine größere Fehleranfälligkeit erzeugt werden. Durch die notwendige Anordnung der Betätigungselemente sind diese nachteilig auch großen Biege- und Torsionsmomenten während des Schaltvorgangs sowohl durch Verkippen des Schalthebels als auch durch entsprechende Auslenkung der Seilzüge ausgesetzt, welche neben einem geringeren Wirkungsgrad zu einer frühzeitigen Ermüdung des Materials und damit zur Verringerung der Lebensdauer der Schalteinrichtung führen können. Des weiteren sind die Kugelgelenke der Schalteinrichtung sehr anfällig gegen Ausknöpfen bzw. Verkanten bei eventuellen Schwenkbewegungen des Schalthebels durch den Fahrer des Kraftfahrzeuges während der Fahrt.

In der DE 196 00 526 C2 sowie der DE 44 26 207 C1 sind Schaltvorrichtungen für ein Automatikgetriebe eines Kraftfahrzeuges offenbart, bei denen der Wählhebel zwischen zwei verschiedenen Schaltgassen hin- und hergeschwenkt werden kann. An dem unteren freien Ende des Schalthebels ist der Schaltzug in Form eines Seilzuges befestigt. Durch Verkippen des Schalthebels von der Schaltgasse in die Wählgasse wird gleichzeitig der Seilzug ausgelenkt. Diese Auslenkung hat wiederum eine Verringerung des Wirkungsgrades sowie der Lebensdauer des Seilzuges bzw. des Schaltgetriebes aufgrund der größeren Belastung zur Folge.

Es ist daher Aufgabe der vorliegenden Erfindung, eine Schaltvorrichtung bereitzustellen, bei der Schalt- und Wählbewegung weitestgehend entkoppelt sind, und die einfacher und zuverlässiger herzustellen, zu montieren und zu betreiben ist.

Diese Aufgabe wird erfindungsgemäß mit einer Schalteinrichtung gemäß den Merkmalen des Anspruches 1 gelöst. Weitere vorteilhafte Ausgestaltungen der erfindungsgemäßen Schalteinrichtung nach Anspruch 1 ergeben sich durch die Merkmale der Unteransprüche.

Die erfindungsgemäße Schalteinrichtung weist einen Schalthebel auf, der kardanisch über zwei definiert festgelegte Schwenkachsen gelagert ist. Schaltzug und Wählzug sind örtlich voneinander getrennt, und Schalt- und Wählbewegung sind voneinander entkoppelt. Da ein Kreuzstück mit einem daran in einem Abstand von der Schaltachse befestigten Schalthebel vorgesehen ist, welches in einem Gehäuse um die Schaltachse schwenkbar gelagert ist, wobei die Verschwenkung in Richtung der Schaltbewegung, die durch Mitnahme des Kreuzstückes durch den zur Ausführung der Schaltbewegung verschwenkten Schalthebel erfolgt, den an dem unteren freien Ende des Kreuzstücks befestigten und somit nicht direkt mit dem Schalthebel verbundenen Schaltzug betätigt, erfährt der Schaltzug während des Schaltvorganges nur geringfügige Winkelauslenkungen gemäß der Kreisbahn, die das Kreuzstück bei dem Verschwenken beschreibt, was einer nahezu linearen Bewegung gleichzusetzen ist. Durch diese geringfügige Auslenkung des Schaltzuges bleibt der Kraftangriffspunkt nahezu konstant, wodurch auch der Wirkungsgrad, der bei größeren Winkelauslenkungen der Seilzüge abnimmt, ebenfalls konstant bleibt und auch die Lebensdauer des Schaltzuges wird aufgrund der gleichförmigen Belastung heraufgesetzt.

Ferner ist der Schalthebel über einen an dem unteren freien Ende des Schalthebels in einem Abstand von der Schaltachse angeordneten Gleitstein in Richtung der Schaltbewegung spielfrei in dem Kreuzstück geführt, so dass zum Ausführen des Schaltvorganges aufgrund des so gegebenen Hebels nur geringe Kräfte zur Mitnahme des Kreuzstückes eingebracht werden müssen. Der Gleitstein an dem unteren freien Ende sorgt durch die spielfreie Lagerung zusätzlich für eine exakte Führung des Schalthebels bei dem Verschwenken des Schalthebels in Richtung der Wählbewegung, indem er in einer in dem Kreuzstück vorgesehenen Aussparung entsprechend der Bewegung des Schalthebels hin und her gleitet.

Es ist vorteilhaft, die Wählachse in dem Kreuzstück anzuordnen, und den Schalthebel auf der Wählachse schwenkbar zu lagern, da so die zwei von einander entkoppelte Schwenkachsen definiert geführt sind. Ein Verschwenken des Wählhebels über den Schaltknauf durch den Fahrer wird dadurch unterbunden, wodurch die Gefahr eines etwaigen Verkantens des Schalthebels bzw. der Beschädigung der Schalteinrichtung verringert wird. Weiterhin vorteilhaft erweist sich dabei, dass durch diese Anordnung bei dem Verschwenken des Schalthebels um die Wählachse das Kreuzstück im wesentlichen in Ruhe bleibt, da somit der Schaltzug bei dem Verschwenken des Schalthebels in Richtung der Wählbewegung ebenfalls in Ruhe bleibt und keine Winkeländerungen erfährt.

Weiterhin weist das Gleitstück vorteilhaft eine Walze auf, die ein Verschwenken des Schalthebels zum Ausrühren der Wählbewegung durch Abrollen auf einer von der Kulisse des Kreuzstückes festgelegten Bahn ermöglicht, wobei das Kreuzstück im wesentlichen in Ruhe bleibt und die Ausgestaltung der Kulisse des Kreuzstückes in dem Bereich der Lauffläche der Walze die Schaltcharakteristik festlegt. Durch die Steilheit der Kulisse wird die Kraft bestimmt, die aufgewendet werden muß, um den Schalthebel entgegen der Federkraft der Schraubenfeder zu bewegen.

Des weiteren kann vorteilhaft die Lauffläche der Walze in dem Kreuzstück so ausgebildet werden, dass eine Schlagsperre ein ungewolltes Einlegen des Rückwärtsganges unterbindet. Dies kann beispielsweise durch Einbringung von Stegen erfolgen, die ein Schalten in diese Schaltgasse nur durch größeren Kraftaufwand oder durch eine eventuell vorgesehene Entriegelung ermöglicht.

Der Schalthebel weist weiterhin vorteilhaft einen Schaltfinger auf, der mittels eines Kugelgelenkes in einem zusätzlich vorhandenen Wählhebel der Schalteinrichtung schwenkbar gelagert ist und der bei dem Verschwenken des Schalthebels über den Wählhebel einen Wählzug betätigt. Der Wählhebel wird beim Verschwenken des Schalthebels über den an dem Schalthebel angeformten Schaltfinger an seinem oberen freien Ende nach oben bzw. nach unten bewegt. Er kann winklig ausgeführt und an seinem Scheitelpunkt derart gelagert sein, dass von den durch den Schaltfinger hervorgerufenen Auf- und Abbewegungen der Wählzug, der an dem anderen freien Ende des Wählhebels fixiert ist, nahezu linear vor- und zurück bewegt wird. Dabei wird der Schaltfinger aufgrund der Hebelwirkung und der Übersetzung, die durch die Formgebung des Wählhebels erreicht wird, bei dem Betätigen des Wählzuges keinen großen Biege- und Torsionsmomenten ausgesetzt, da so die benötigte Krafteinleitung zur Betätigung des Schalthebels gering ist.

Die Lagerschale des Kugelgelenkes, in der der Schaltfinger des Schalthebels gelagert ist, ist vorteilhaft derart in den Wählhebel eingesetzt, dass sie zum Höhenausgleich bei Verschwenkung des Schalthebels in Richtung der Wählbewegung geringfügige Auslenkungen in Richtung der Wählbewegung ausführen kann.

Weiterhin weist der Wählhebel vorteilhaft weitere Aussparungen auf, die eine Bewegung der Lagerschale in dem Wählhebel entsprechend der bei dem Schalten in einer äußeren Schaltgasse durch den Schaltfinger des Schalthebels beschriebenen Kreisbahn ermöglicht.

Gegenüber dem Stand der Technik stellt die erfindungsgemäße Schalteinrichtung demnach eine wesentlich einfachere und weniger wartungsintensive Ausführung dar, da lediglich ein Kugelgelenk zur Lagerung des Schaltfingers eingesetzt wird und durch den Einsatz zweier festgelegter Achsen, über die Schalt- und Wählzug indirekt betätigt werden, die Bewegung des Schalthebels auf exakten Bahnen verläuft und dadurch die Gefahr eines etwaigen Verkantens des Schaltknaufes bzw. ein Ausknöpfen eines Kugelgelenkes durch eventuelles Verschwenken des Schalthebels durch den Fahrer des Kraftfahrzeuges oder bei extremen Auslenkungen des Schalthebels zum Schalten in den außenliegenden Schaltgassen verringert wird.

Nachfolgend wird ein Ausführungsbeispiel der erfindungsgemäßen Schalteinrichtung anhand der Zeichnung näher erläutert.

Es zeigen:
- Figur 1:: eine perspektivische Darstellung der Schalteinrichtung;
- Figur 2:: eine Rückansicht der Schalteinrichtung mit verschiedenen Positionen des Schalthebels;
und
- Figur 3:: eine Seitenansicht der Schalteinrichtung von links.

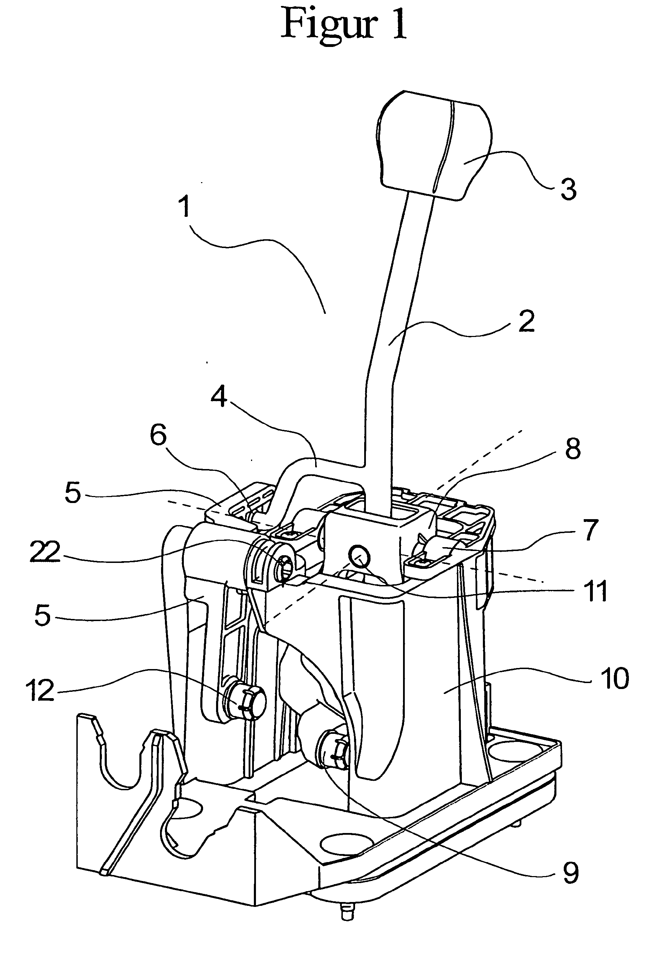

Figur 1 zeigt eine Schalteinrichtung 1 für Kraftfahrzeuge mit einem Schalthebel 2. An dem oberen freien Ende des Schalthebels 2 ist ein Schaltknauf 3 aufgeschraubt oder aufgesteckt. An dem Schalthebel 2 ist ein Schaltfinger 4 angeformt, der winklig ausgeführt ist und in einem Wählhebel 5 mittels Kugelgelenk 6 gelagert ist. Weiterhin ist der Schalthebel 2 über eine Bolzenverbindung 7 mit einem Kreuzstück 8 verbunden. Die Bolzenverbindung 7 ermöglicht ein Verschwenken des Schalthebels 2 in Richtung einer Wählbewegung, die in dem Ausführungsbeispiel so angeordnet ist, dass über das Verschwenken des Schalthebels 2 in Richtung der Wählbewegung quer zur Fahrtrichtung des Kraftfahrzeuges zwischen den einzelnen Schaltgassen hin- und hergeschaltet werden kann. In der Schalteinrichtung 1 können beispielsweise zwei verschiedene Schaltgassen bei Automatikgetrieben angeordnet sein aber auch drei oder mehr Schaltgassen beispielsweise bei manuellen H-Schaltungen mit bis zu sechs Vorwärtsgängen und einem Rückwärtsgang.

Das Kreuzstück 8 ist über zwei Verbindungsstücke achsgelagert. Diese Achslagerung ist an einem Gehäuse 10 beidseitig fixiert. Sie ermöglicht ein Verschwenken des Kreuzstückes 8 in Richtung der Schaltbewegung, wobei die Richtung der Schaltbewegung in dem Ausführungsbeispiel in Fahrtrichtung des Kraftfahrzeuges senkrecht zur Richtung der Wählbewegung ausgerichtet ist. Weiterhin weist das Kreuzstück 8 an seinem unteren freien Ende eine Befestigungsmöglichkeit 9 für einen nicht dargestellten Seilzug, den Schaltzug, auf.

Der Wählhebel 5 ist in dem Ausführungsbeispiel mit einem 90°-Winkel ausgeführt. Er ist in dem Winkelbereich mittels einer Bolzenverbindung in dem Gehäuse 10 gelagert. An seinem unteren freien Ende weist der Wählhebel 5 eine Befestigungsmöglichkeit 12 für einen Wählzug auf.

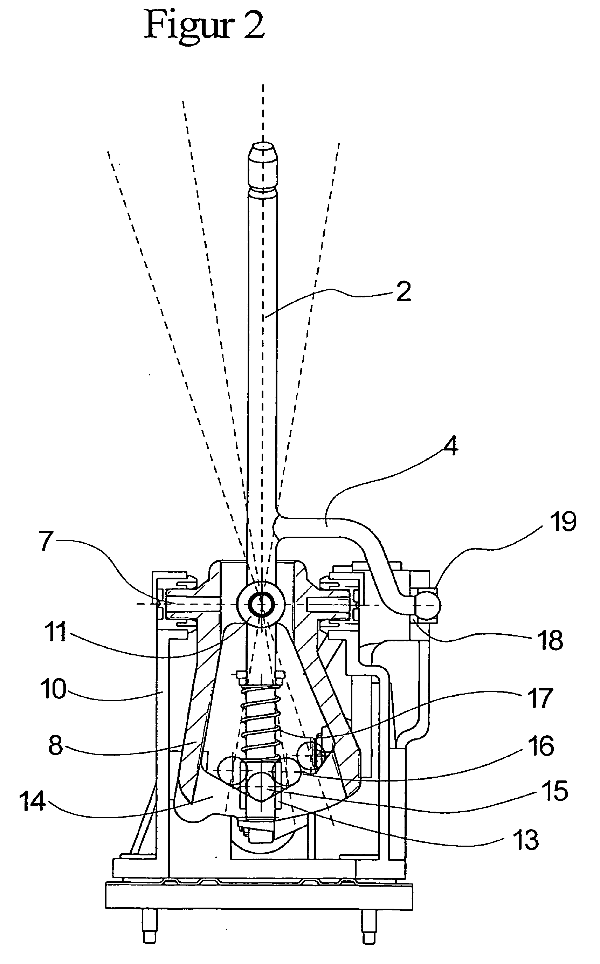

Figur 2 zeigt eine Rückansicht der erfindungsgemäßen Ausführungsform der Schalteinrichtung 1. An dem unteren freien Ende des Schalthebels 2 ist ein Gleitstein 13 angeformt. In dem Kreuzstück 8 ist eine Aussparung 14 vorgesehen, die zusammen mit dem in der Aussparung 14 angeordneten Gleitstein 13 eine spielfreie Lagerung des Schalthebels 2 in dem Kreuzstück 8 ermöglicht. An dem Gleitstein 13 ist eine Walze 15 befestigt, die auf der von einer Kulisse 16 des Kreuzstückes 8 vorgegebenen Bahn abrollt. Die gestrichelten Linien stellen mit der in verschiedenen Positionen dargestellten Walze 15 die verschiedenen möglichen Bereiche dar, in die der Schalthebel 2 zum Schalten in den verschiedenen Schaltgassen verschwenkt werden kann. Oberhalb des Gleitsteines 13 kann eine Schraubenfeder 17 angeordnet sein, die eine Rückstellung des Schalthebels 2 in eine vorgegebene Schaltgasse unterstützt, in welcher beispielsweise vorzugsweise geschaltet werden soll. Durch die Formgebung der Kulisse 16 des Kreuzstückes 8 in dem Bereich der Lauffläche der Walze 15 kann die Schaltcharakteristik der Schalteinrichtung variabel festgelegt werden. Über die Steilheit der Lauffläche der Walze auf der Kulisse 16 des Kreuzstückes 8 kann der Wechsel von Schaltgasse zu Schaltgasse leicht- oder schwergängiger gemacht werden, da nur entgegen der Federkraft der Schraubenfeder 17 der Wechsel der Schaltgasse möglich ist.

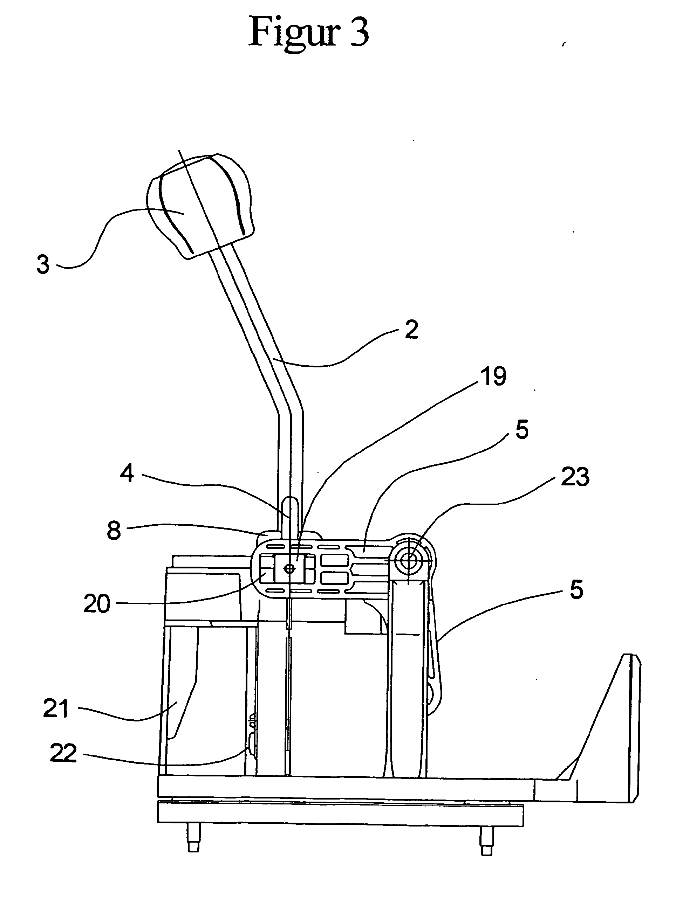

Figur 3 zeigt eine Seitenansicht der erfindungsgemäßen Ausführungsform der Schalteinrichtung 1. Der Wählhebel 5 weist ein Bewegungsfenster 20 auf, welches eine Bewegung einer Lagerschale 19 in dem Wählhebel 5 in Richtung der Schaltbewegung, die durch den Schaltfinger 4 bei dem Schalten in Schaltgassen außerhalb der zentralen Schaltgasse auf einer Kreisbahn erfolgt, ermöglicht. Des weiteren ist an dem Gehäuse 9 ein Anschlag 21 sowie ein weiterer nicht dargestellter Anschlag vorgesehen, die die Schaltbewegung in Richtung der Schaltbewegung begrenzen. Ein an dem Kreuzstück befestigter Elastomerdämpfer 22 sowie ein weiterer nicht dargestellter Dämpfer sorgen für eine schadenfreie Federung des Kreuzstückes 8 bei Erreichen der die Begrenzung der Schaltbewegung darstellenden Anschläge 21.

Bei Betätigung des Schalthebels 2 in Richtung der Schaltbewegung wird über das Kreuzstück 8 der nicht dargestellte Schaltzug je nach Schaltvorgang nach vorne bzw. zurück bewegt. Dadurch wird der Gangwechsel in dem nicht dargestellten Getriebe eingeleitet. Bei einem Verschwenken des Schalthebels 2 in Richtung der Schaltbewegung bleibt der Wählhebel 5 und somit auch der nicht dargestellte Wählzug in Ruhe, da der in dem Wählhebel 5 gelagerte Schaltfinger 4 sich bei dieser Bewegung lediglich eine Schwenkbewegung in dem Kugelgelenk 6 ausführt.

Zur Betätigung des Wählzuges wird der Schalthebel in Richtung der Wählbewegung quer zur Fahrtrichtung verschwenkt, und der Wählhebel 5 dabei mittels eines Schaltfingers 4, der an dem Schalthebel 2 angeformt ist, verschwenkt. Wird nun der Schalthebel 2 beispielsweise nach rechts verschwenkt, so wird über den Schaltfinger 4 der Wählhebel 5 an seinem oberen freien Ende nach unten gedrückt. Dies ruft eine Verschwenkung des Wählhebels 5 um die Bolzenverbindung 23 hervor, wodurch das untere freie Ende des Wählhebels 5 nach vorne geschoben wird. Dadurch wird schließlich der Wählzug betätigt und der entsprechende Schaltgassenwechsel an das Getriebe weitergeleitet. Analog wird bei einer Schwenkbewegung des Schalthebels 2 nach links der Wählhebel 5 mittels des Schaltfingers nach oben gedrückt, wodurch sich das untere freie Ende des Wählhebels 5 nach hinten bewegt. Bei Verschwenken des Schalthebels in Richtung der Wählbewegung zum Wechsel der Schaltgassen gleitet der Gleitstein 13 entsprechend nach rechts bzw. links.

Um ein Verschwenken des Schalthebels 2 in die außen gelegenen Positionen zu ermöglichen, ist es notwendig, das Kugelgelenk 6 bzw. die Lagerschale 19 des Kugelgelenkes in dem Wählhebel 5 zur Lagerung des Schaltfingers 4 in Richtung der Wählbewegung beweglich zu lagern. Dafür ist in dem Wählhebel 5 ein Bewegungsspalt 18 vorgesehen, der eine Bewegung der Lagerschale 19 bei Verschwenken des Schalthebels 2 in Richtung der Wählbewegung ermöglicht. Bei Verschwenken des Schalthebels 2 nach rechts wird die Lagerschale 19 entsprechend nach rechts in dem Bewegungsspalt 18 in Richtung der Wählbewegung innerhalb des Wählhebels 5 verschoben. Ein Verschwenken des Schalthebels 2 nach links in Richtung der Wählbewegung bewirkt analog eine Verschiebung der Lagerschale 19 nach links in dem Bewegungsspalt 18 innerhalb des Wählhebels 5.

Bei sämtlichen Bewegungen in Richtung der Wählbewegung bleibt das Kreuzstück 8 in Ruhe, so dass das Verschwenken des Schalthebels 2 in Richtung der Wählbewegung keine Winkeländerung des Kraftangriffspunktes des Schaltzuges zur Folge hat, was gleichbedeutend mit einem konstanten Wirkungsgrad der Schalteinrichtung 1 ist.

Befindet sich der Schalthebel in einer der äußeren Schaltgassen, ist es zum Ausführen einer Schaltbewegung zusätzlich notwendig, das Kugelgelenk 6 bzw. die Lagerschale 19 des Kugelgelenkes in dem Wählhebel 5 zur Lagerung des Schaltfingers 4 in Richtung der Schaltbewegung beweglich zu lagern. Dafür ist in dem Wählhebel 5 ein Bewegungsfenster 20 vorgesehen, der eine Bewegung der Lagerschale 19 bei Verschwenken des Schalthebels 2 in Richtung der Schaltbewegung ermöglicht. Bei Verschwenken des Schalthebels 2 nach vorne in Fahrtrichtung wird die Lagerschale 19 entsprechend nach vorne in dem Bewegungsfenster 20 in Fahrtrichtung innerhalb des Wählhebels 5 verschoben. Ein Verschwenken des Schalthebels 2 nach hinten in Richtung der Schaltbewegung entgegen der Fahrtrichtung bewirkt analog eine Verschiebung der Lagerschale 19 nach hinten in dem Bewegungsfenster 20 innerhalb des Wählhebels 5.

In diesem Ausführungsbeispiel ist insbesondere in Figur 2 eine Möglichkeit zur Einrichtung einer Schlagsperre 24 beispielsweise für einen Schutz gegen ungewolltes Einlegen des Rückwärtsganges schematisch gezeigt. Zum Einlegen des Rückwärtsganges muß in dem gezeigten Beispiel der Schalthebel 2 ganz nach links verschwenkt werden. Die Schlagsperre 24 ist in Form eines Vorsprunges ausgeführt. Zur Überwindung dieses Vorsprunges bedarf es einer erheblich größeren Kraftaufwendung als bei dem Verschwenken des Schalthebels 2 zum Wählen einer anderen Schaltgasse. Ein Schalten in diese Schaltgasse kann nur durch größeren Kraftaufwand (z.B. Schlag) oder durch eine eventuell vorgesehene Entriegelung ermöglicht werden.

### Bezugszeichenliste

- 1:: Schalteinheit
- 2:: Schalthebel
- 3:: Schaltknauf
- 4:: Schaltfinger
- 5:: Wählhebel
- 6:: Kugelgelenk
- 7:: Bolzenverbindung für Schaltachse Schalthebel
- 8:: Kreuzstück
- 9:: Befestigungsmöglichkeit Schaltzug
- 10:: Gehäuse
- 11:: Bolzenverbindung für Wählachse Schalthebel
- 12:: Befestigungseinrichtung Wählzug
- 13:: Gleitstein
- 14:: Aussparung zur Führung des Gleitsteines
- 15:: Walze
- 16:: Kulisse des Kreuzstückes
- 17:: Feder
- 18:: Bewegungsspalt
- 19:: Lagerschale
- 20:: Bewegungsfenster
- 21:: Anschlag Kreuzstück
- 22:: Elastomerdämpfer für Anschlag
- 23:: Bolzenverbindung Wählhebel
- 24:: Schlagsperre

## Patentansprüche

1. Schalteinrichtung für ein Getriebe eines Kraftfahrzeuges mit einem Schaltschema, das wenigstens zwei etwa in Längsrichtung des Kraftfahrzeugs ausgerichtete Schaltgassen und mindestens eine quer zu den Schaltgassen angeordnete Wählgasse aufweist, mit einem um zwei Schwenkachsen schwenkbar gelagerten Schalthebel (2), wobei eine erste Schwenkachse eine Schaltachse bildet, eine weitere Schwenkachse eine Wählachse bildet, und durch Verschwenken des Schalthebels (2) eine Schaltbewegung in Richtung einer Schaltgasse und eine Wählbewegung in Richtung der Wählgasse ausführbar ist, wobei Wähl- und Schaltbewegung voneinander entkoppelt sind, wobei ein Kreuzstück (8) mit einem daran in einem Abstand von der Schaltachse befestigten Schalthebel (2) in einem Gehäuse (10) um die Schaltachse schwenkbar gelagert ist und durch die Verschwenkung des Schalthebels (2) in Richtung der Schaltbewegung durch Mitnahme des Kreuzstückes (8) der Schaltzug betätigt wird, welcher am unteren freien Ende des Kreuzstückes (8) befestigt ist, **dadurch gekennzeichnet, dass** der Schalthebel (2) über einen an einem unteren freien Ende des Schalthebels (2) in einem Abstand von der Schaltachse angeordneten Gleitstein (13) in Richtung der Schaltbewegung spielfrei in dem Kreuzstück (8) geführt ist.

2. Schalteinrichtung nach Anspruch 1, **dadurch gekennzeichnet, dass** die Wählachse in dem Kreuzstück (8) angeordnet ist, und der Schalthebel (2) auf der Wählachse schwenkbar gelagert ist.

3. Schalteinrichtung nach einem der vorhergehenden Ansprüche, **dadurch gekennzeichnet, dass** bei dem Verschwenken des Schalthebels (2) um die Wählachse das Kreuzstück (8) im wesentlichen in Ruhe bleibt.

4. Schalteinrichtung nach einem der vorherigen Ansprüche **dadurch gekennzeichnet, dass** der Gleitstein (13) eine Walze (15) aufweist, die ein Verschwenken des Schalthebels (2) zum Ausführen der Wählbewegung auf einer vom Kreuzstück (8) festgelegten Bahn ermöglicht, wobei das Kreuzstück (8) im wesentlichen in Ruhe bleibt.

5. Schalteinrichtung nach Anspruch 4, **dadurch gekennzeichnet, dass** die Ausgestaltung einer Kulisse (16) des Kreuzstückes (8) in dem Bereich der Lauffläche der Walze (15) die Schaltcharakteristik festlegt.

6. Schalteinrichtung nach Anspruch 5, **dadurch gekennzeichnet, dass** die Lauffläche der Walze (15) der Kulisse (16) des Kreuzstückes (8) so ausgebildet ist, dass eine Schlagsperre ein ungewolltes Einlegen des Rückwärtsganges unterbindet.

7. Schalteinrichtung nach einem der vorhergehenden Ansprüche, **dadurch gekennzeichnet, dass** der Schalthebel (2) einen Schaltfinger (4) aufweist, der in einer Lagerung eines Wählhebels (5) schwenkbar gelagert ist und bei dem Verschwenken des Schalthebels (2) über den Wählhebel (5) einen Wählzug betätigt.

8. Schalteinrichtung nach Anspruch 7, **dadurch gekennzeichnet, dass** eine Lagerschale (19), in der der Schaltfinger (4) des Schalthebels (2) in dem Wählhebel (5) gelagert ist, zum Höhenausgleich bei Verschwenkung des Schalthebels (2) in Richtung der Wählbewegung geringfügige Auslenkungen in einem Bewegungsspalt (18) ausführen kann.

9. Schalteinrichtung nach Anspruch 8, **dadurch gekennzeichnet, dass** der Wählhebel (5) ein Bewegungsfenster (20) aufweist, das eine Bewegung der Lagerschale (19) in dem Wählhebel (5) entsprechend der bei dem Schalten in einer äußeren Schaltgasse durch den Schaltfinger (4) des Schalthebels (2) beschriebenen Kreisbahn ermöglicht.

## Claims

1. Selector device for a transmission of a motor vehicle having a shift pattern which has at least two shift gates which are oriented approximately in the longitudinal direction of the motor vehicle and at least one selector gate which is arranged transversely with respect to the shift gates, having a gearshift lever (2) which is mounted such that it can be pivoted about two pivot pins, a first pivot pin forming a shift pin, a further pivot pin forming a selecting pin, and it being possible for a shift movement to be carried out in the direction of a shift gate and for a selecting movement to be carried out in the direction of the selector gate by way of pivoting of the gearshift lever (2), the selecting and shift movements being decoupled from one another, a crosspiece (8) with a gearshift lever (2) which is fastened on it at a spacing from the pivot pin being mounted in a housing (10) such that it can be pivoted about the pivot pin, and the shifting cable which is fastened to the lower free end of the crosspiece (8) being actuated by driving of the crosspiece (8) as a result of the pivoting of the gearshift lever (2) in the direction of the shift movement, **characterized in that** the gearshift lever (2) is guided without play in the crosspiece (8) in the direction of the shift movement via a sliding block (13) which is arranged at a lower free end of the gearshift lever (2) at a spacing from the shift pin.

2. Selector device according to Claim 1, **characterized in that** the selecting pin is arranged in the crosspiece (8), and the gearshift lever (2) is mounted pivotably on the selecting pin.

3. Selector device according to one of the preceding claims, **characterized in that** the crosspiece (8) remains substantially at rest during the pivoting of the gearshift lever (2) about the selecting pin.

4. Selector device according to one of the preceding claims, **characterized in that** the sliding block (13) has a roller (15) which makes pivoting of the gearshift lever (2) possible in order to carry out the selecting movement on a track which is fixed by the crosspiece (8), the crosspiece (8) remaining substantially at rest.

5. Selector device according to Claim 4, **characterized in that** the design of a slotted guide (16) of the crosspiece (8) in the region of the running face of the roller (15) fixes the shifting characteristic.

6. Selector device according to Claim 5, **characterized in that** the running face of the roller (15) of the slotted guide (16) of the crosspiece (8) is configured in such a way that a safety lock prevents undesired engagement of the reverse gear.

7. Selector device according to one of the preceding claims, **characterized in that** the gearshift lever (2) has a selector finger (4) which is mounted pivotably in a bearing of a selector lever (5) and in which pivoting of the gearshift lever (2) actuates a selector cable via the selector lever (5).

8. Selector device according to Claim 7, **characterized in that** a bearing shell (19), in which the selector finger (4) of the gearshift lever (2) is mounted in the selector lever (5), can carry out slight deflections in a movement gap (18) for height compensation during pivoting of the gearshift lever (2) in the direction of the selecting movement.

9. Selector device according to Claim 8, **characterized in that** the selector lever (5) has a movement window (20) which makes a movement of the bearing shell (19) in the selector lever (5) possible in accordance with the circular path which is described by the selector finger (4) of the gearshift lever (2) during shifting in an outer shift gate.

## Revendications

1. Dispositif de sélection de vitesse pour une boîte de vitesses d'un véhicule automobile, comprenant un système de changement de vitesse qui présente au moins deux voies de changement de vitesse orientées dans la direction longitudinale du véhicule automobile et au moins une voie de sélection disposée transversalement aux voies de changement de vitesse, un levier de changement de vitesse (2) monté de manière pivotante autour de deux axes de pivotement, un premier axe de pivotement formant un axe de changement de vitesse, un autre axe de pivotement formant un axe de sélection et par pivotement du levier de changement de vitesse (2), un mouvement de changement de vitesse pouvant être effectué dans la direction d'une voie de changement de vitesse et un mouvement de sélection pouvant être effectué dans la direction de la voie de sélection, le mouvement de sélection et de changement de vitesse étant désaccouplés l'un de l'autre, une pièce en croix (8) avec un levier de changement de vitesse (2) fixé sur elle à distance de l'axe de changement de vitesse étant montée dans un boîtier (10) de manière à pouvoir pivoter autour de l'axe de changement de vitesse, et par pivotement du levier de changement de vitesse (2) dans la direction du mouvement de changement de vitesse par entraînement de la pièce en croix (8), le câble de changement de vitesse étant actionné, lequel est fixé à l'extrémité libre inférieure de la pièce en croix (8), **caractérisé en ce que** le levier de changement de vitesse (2) est guidé sans jeu dans la pièce en croix (8) dans la direction du mouvement de changement de vitesse par le biais d'un coulisseau (13) disposé à une extrémité libre inférieure du levier de changement de vitesse (2) à distance de l'axe de changement de vitesse.

2. Dispositif de changement de vitesse selon la revendication 1, **caractérisé en ce que** l'axe de sélection est disposé dans la pièce en croix (8) et le levier de changement de vitesse (2) est monté de manière pivotante sur l'axe de sélection.

3. Dispositif de changement de vitesse selon l'une quelconque des revendications précédentes, **caractérisé en ce que** dans le cas du pivotement du levier d e changement de vitesse (2) autour de l'axe de sélection, la pièce en croix (8) reste sensiblement immobile.

4. Dispositif de changement de vitesse selon l'une quelconque des revendications précédentes, **caractérisé en ce que** le coulisseau (13) présente un galet (15) qui permet un pivotement du levier de changement de vitesse (2) pour effectuer le mouvement de sélection sur une voie fixée par la pièce en croix (8), la pièce en croix (8) restant sensiblement immobile.

5. Dispositif de changement de vitesse selon la revendication 4, **caractérisé en ce que** la réalisation d'une coulisse (16) de la pièce en croix (8) dans la région de la surface de roulement du galet (15) fixe la caractéristique de changement de vitesse.

6. Dispositif de changement de vitesse selon la revendication 5, **caractérisé en ce que** la surface de roulement du galet (15) de la coulisse (16) de la pièce en croix (8) est réalisée de telle sorte qu'une butée d'arrêt empêche un enclenchement accidentel du rapport de marche arrière.

7. Dispositif de changement de vitesse selon l'une quelconque des revendications précédentes, **caractérisé en ce que** le levier de changement de vitesse (2) présente un doigt de changement de vitesse (4) qui est monté de manière pivotante dans un support de palier d'un levier de sélection (5), et qui actionne un câble de sélection lors du pivotement du levier de changement de vitesse (2) par le biais du levier de sélection (5).

8. Dispositif de changement de vitesse selon la revendication 7, **caractérisé en ce qu'**une coque de palier (19) dans laquelle le doigt de changement de vitesse (4) du levier de changement de vitesse (2) est supporté dans le levier de sélection (5), peut effectuer de légères déviations dans une fente de déplacement (18), pour la compensation de hauteur lors du pivotement du levier de changement de vitesse (2) dans la direction du mouvement de sélection.

9. Dispositif de changement de vitesse selon la revendication 8, **caractérisé en ce que** le levier de sélection (5) présente une fenêtre de déplacement (20) qui permet un déplacement de la coque de palier (19) dans le levier de sélection (5) en fonction de la trajectoire circulaire décrite lors du changement de vitesse dans une voie de changement de vitesse extérieure par le doigt de changement de vitesse (4) du levier de changement de vitesse (2).
